# EUROPEAN PATENT APPLICATION

(11) **EP 2 811 619 A1**
(43) Date of publication of application: **10.12.2014**
(21) Application number: 13170975.0
(22) Date of filing: 07.06.2013
(51) Int. Cl.: H02K 1/18, H02K 5/04, H02K 15/14

(54) **Rotating electric machine**

(71) Applicant: ABB Technology AG, 8050 Zürich (CH)
(72) Inventor: Moioli, Giuseppe, 20037 Paderno Dugnano (MI) (IT)
(74) Representative: De Santis, Giovanni

(57) **Abstract**

An electric machine comprises a machine frame (side wall 18) and a stator inside the machine frame. The stator comprises a stator core (2) and a stator frame (10). The stator frame comprises a first end flange (11), a second end flange (12) and a plurality of bars (13) being positioned around and connected to the outer periphery of the stator core (2) and including a first end portion (14) and a second end portion (15) being connected to a first end flange (11) and a second end flange (12). An anti-rotation assembly comprising an anti-rotation block (20) with a clamping portion (22), first connection means (23) to connect the anti-rotation block (20) to the machine frame (side wall 18) and second connection means (24) to enable the anti-rotation block (20) to clamp the first end portion (14) of a stator frame bar (13) via deformation.

## Description

The present disclosure relates to a rotating electric machine with an anti-rotation assembly for blocking any rotation of the stator.

As known, electrical machines, such as generators or motors, comprise a machine frame, a rotor mounted on a rotating shaft, and a fixed portion, namely a stator, which is permanently connected to and supported by the machine frame.

Usually, when the rotor of the machine rotates, its magnetic field revolves in unison with it and tends to drag into rotation also the stator; as a consequence, the stator may undergo a rotation from its initial position relative to the frame.

This possible rotation of the stator can cause malfunctioning and can even arrive to put out of order the machine.

Such issue becomes even more relevant in particular applications, e.g. when the machine works according to the so-called duty type S9.

Indeed, the S9 duty includes non-periodic load and speed variations within the permissible operating load; in particular, the S9 duty includes frequently applied overloads that may greatly exceed the reference load of the rotating electric machine.

The main task of the present disclosure is to provide a solution which allows facing the above mentioned issue.

Such task is accomplished by a rotating electric machine according to the present disclosure, which comprises:
- a machine frame;
- a stator which is connected to said machine frame and comprises a stator core and a stator frame to which said stator core is connected to, wherein stator frame comprises a first end flange, a second end flange, and a plurality of bars which are positioned spaced apart from each other around and are connected to the outer periphery of said stator core, said bars having a first end portion and a second end portion which are connected to said first end flange and said second end flange, respectively;
- an anti-rotation assembly for blocking the rotation of said stator relative to said machine frame.

The machine according to the present disclosure is in particular characterized in that said anti-rotation assembly comprises:
- at least one anti-rotation block having a clamping portion;
- first connection means for connecting said at least one anti-rotation block to said machine frame;
- second connection means which are connected to said at least one anti-rotation block so as to operatively couple it with the first end portion of a first bar of said plurality of bars; wherein said at least one anti-rotation block has a body which partially deforms when said second connection means are connected therewith so as said clamping portion abuts against surfaces of and clamps said first bar.

Further characteristics and advantages of the present disclosure will become more apparent from the description of some preferred, but not exclusive, embodiments of the rotating electric machine according to the present disclosure, illustrated only by way of non-limiting examples in the accompanying drawings, wherein:
figure 1 is a perspective view showing a portion of a rotating electric machine according to the present disclosure;
figure 2 is a perspective view showing an exemplary embodiment of a stator frame which can be used in a rotating electric machine according to the present disclosure;
figure 3 is perspective view showing an anti-rotation block used in an electrical machine according to the present disclosure;
figure 4 is a view of the anti-rotation block illustrated in figure 3;
figure 5 is a front view schematically illustrating a rotating electrical machine according to the present disclosure;
figure 6 is a perspective view showing an exemplary embodiment of a rotating electrical machine according to the present disclosure.

It should be noted that in the detailed description that follows, identical or similar components, either from a structural and/or functional point of view, have the same reference numerals, regardless of whether they are shown in different embodiments of the present disclosure; it should also be noted that in order to clearly and concisely describe the present disclosure, the drawings may not necessarily be to scale and certain features of the disclosure may be shown in somewhat schematic form.

Further, when the term "adapted" or "arranged" or "configured" or "shaped", is used herein while referring to any component as a whole, or to any part of a component, or to a whole combinations of components, or even to any part of a combination of components, it has to be understood that it means and encompasses correspondingly either the structure, and/or configuration and/or form and/or positioning of the related component or part thereof, or combinations of components or part thereof, such term refers to.

Finally, when the terms transversal or transversally are hereby used, they have to be interpreted as encompassing a direction non-parallel to the part(s) they refer to and perpendicularity has to be considered a specific case of transverse direction.

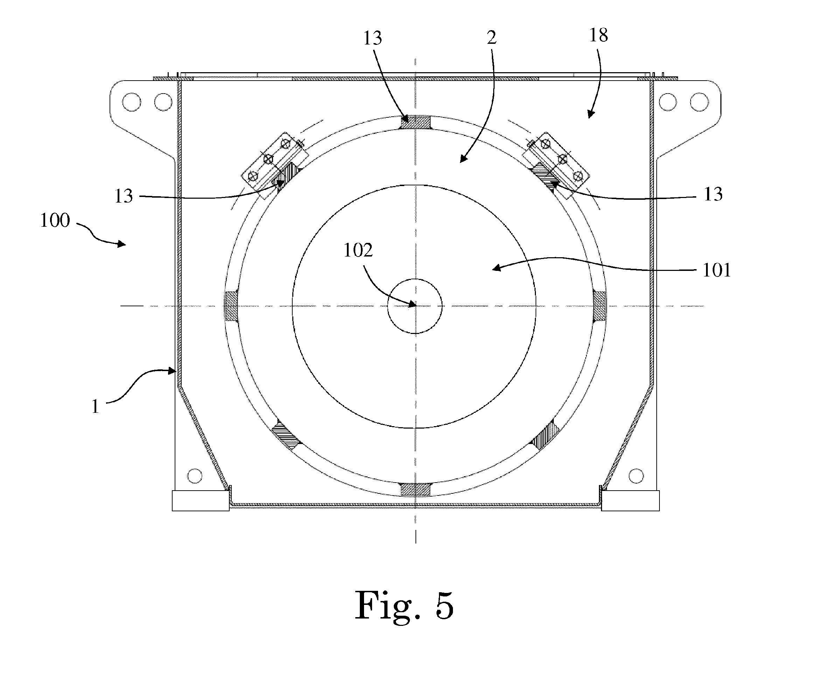

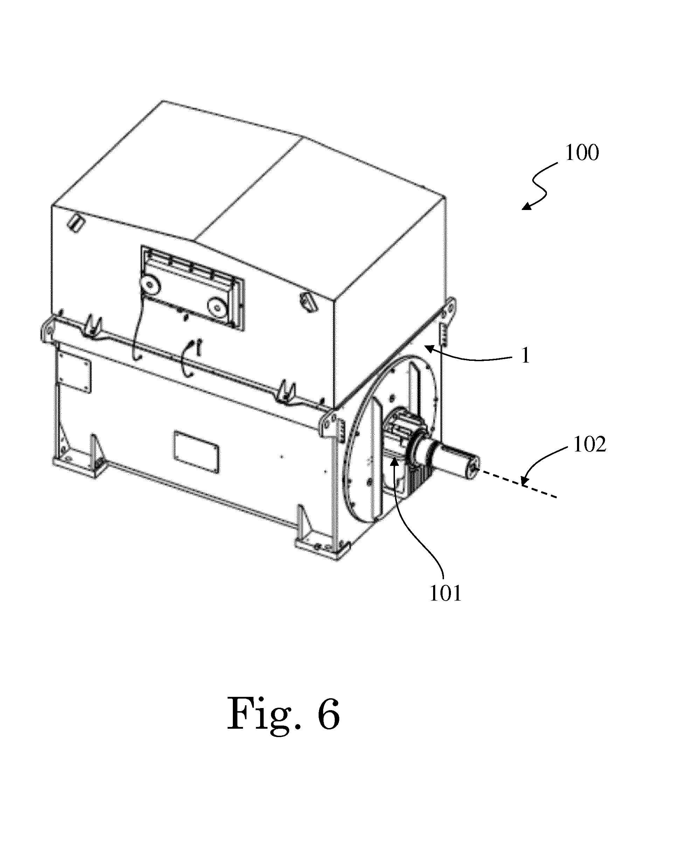

Figures 5 and 6 illustrate a front view and a perspective view of a rotating electric machine 100 according to the present disclosure, hereinafter referred to as the machine 100 for the sake of simplicity.

As illustrated and according to solutions well known in the art and therefore not described herein in detail, the machine 100 comprises: a machine frame 1; a rotor 101 which is usually mounted rotating about a rotation axis 102; a stator which is positioned around the rotor 101 and comprises a stator core 2 and a stator frame 10 to which the stator core 2 is permanently connected to.

For instance, and according to solution well known in the art, the stator core 2 comprises a substantially cylindrical core formed for example by a plurality of mutually stacked laminations on which there are placed stator coils.

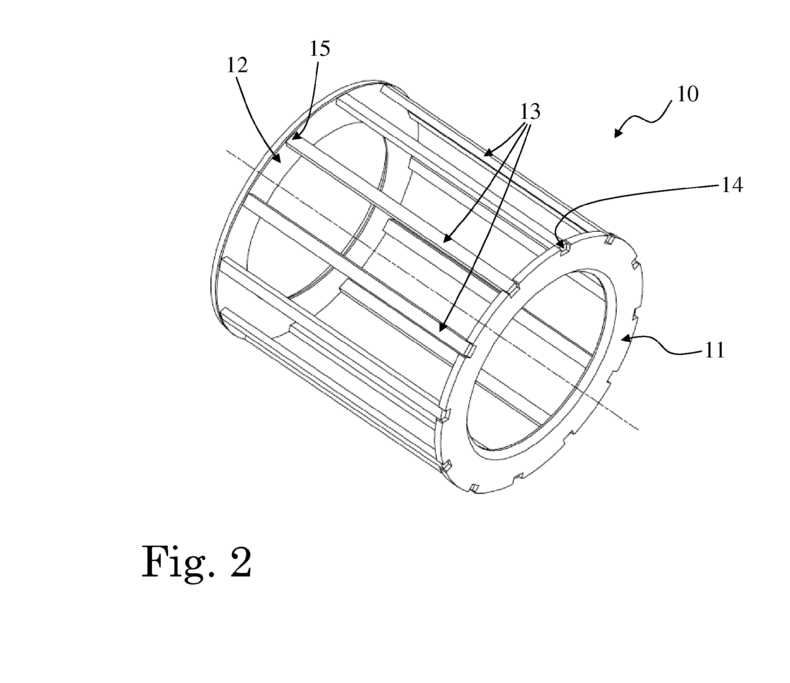

In the exemplary embodiment illustrated in figure 2 the stator frame 10 comprises a first end flange 11, e.g. a front flange, and a second end flange 12, e.g. a back flange; further, the stator frame 10 comprises a plurality of bars 13 which extend lengthwise and have a first end portion 14 and a second end portion 15, opposite to the first end portion 14, which are connected to the first end flange 11 and to the second end flange 12, respectively, for example by soldering.

As illustrated in figure 5, the bars 13 are positioned spaced apart from each other around the outer periphery of the stator core 2 and are connected therewith for example by soldering.

In this way, the stator frame 10 and stator core 2 form a unique unit which, according to solutions well known in the art and therefore not described therein in further details, is mechanically connected to the machine frame 1, for example by means of a series of dowels. Further, the machine 100 comprises an anti-rotation assembly, indicated in the relevant figures by the overall reference number 20, which is suitable to block the possible rotation of the stator relative to the machine frame 1.

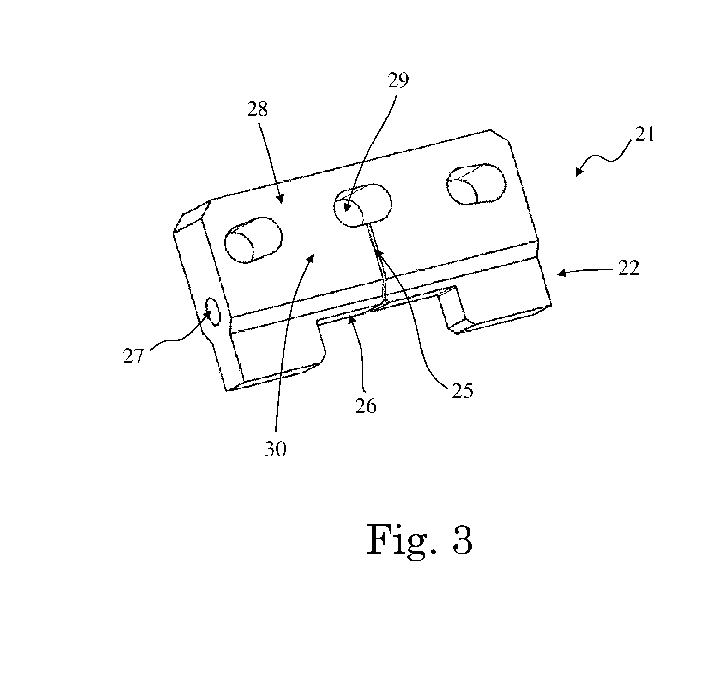

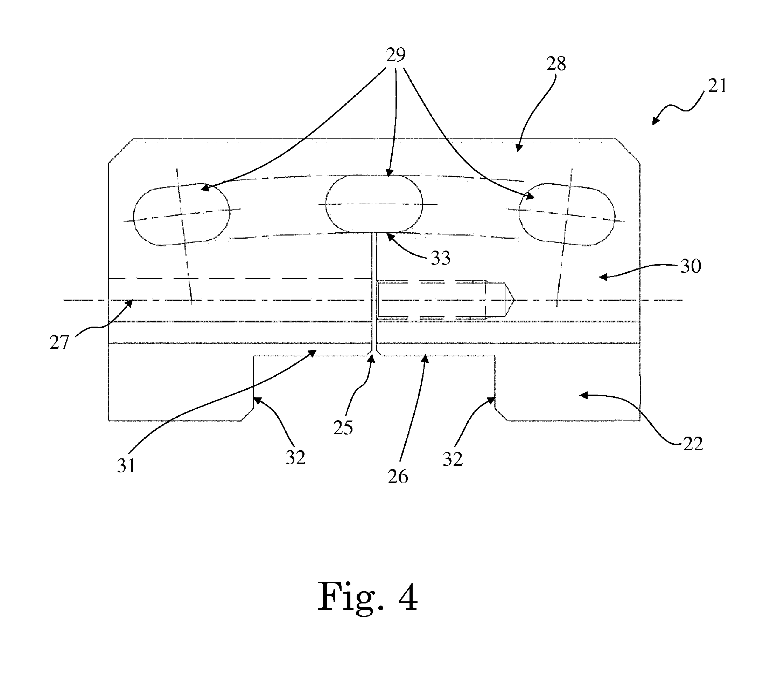

The anti-rotation assembly 20 comprises: at least one anti-rotation block 21 having a clamping portion 22, an exemplary embodiment of which is for instance illustrated in figures 3 and 4; first connection means 23, which comprise for example one or more fixing screws, for connecting the at least one anti-rotation block 21 to the machine frame 1, e.g. to the inner side of a front wall (or back wall) 18 of the machine frame 1 itself; second connection means 24 which are connected to the at least one anti-rotation block 21 so as to operatively couple the anti-rotation block 21 itself with the corresponding end portion, e.g. the first end portion 14, of a first bar 13 of the plurality of bars 13.

Advantageously, the at least one anti-rotation block 21 has a body configured to at least partially deform, e.g. elastically, when the second connection means 24 are connected therewith so as the clamping portion 22, due to the deformation, abuts against corresponding surfaces, e.g. in the embodiment illustrated two opposite surfaces 16, 17, of the first bar 13 and clamps the corresponding end portion of the first bar 13 itself.

In the exemplary embodiment illustrated in figures 3 and 4, the at least one anti-rotation block 21 comprises a cut 25 which extends from an outer surface 26 of the clamping portion 22 towards the inside of the body of the anti-rotation block 21 itself; further, an at least partially threaded hole 27 extends inside the body of the anti-rotation block 21 transversally with respect to and is crossed by the cut 25.

Preferably, as illustrated the at least partially threaded hole 27 is a blind hole.

More in detail, according to the embodiment illustrated in figures 3 and 4, the at least one anti-rotation block 21 comprises: a head portion 28 on which there are provided one or more through openings or slots 29 for receiving the first connection means 23; a central portion 30 which protrudes downwardly from the head portion 28 and is provided with the at least partially threaded hole 27 which extends in a transversal direction with respect to the one or more through openings 29; and the clamping portion 22 which extends from the central portion 30 in a direction opposite with respect to the head portion 28 and has a U-shaped configuration with a central wall 31 and two side walls 32. The two side walls 32 protrude transversally from the central wall 31 and are substantially parallel to each other.

In particular, according to the embodiment illustrated the cut 25 is open outwardly and extends, e.g. substantially longitudinally, from the outer surface 26 of the central wall 31 up to a rim 33 of one of the through openings 29 which are provided on the head portion 28.

In practice, the cut 25 splits longitudinally in two parts a relevant portion of the entire body of the anti-rotation block 21, with only the upper part of the head portion 28, i.e. the area above the openings 29, which is not traversed by the it.

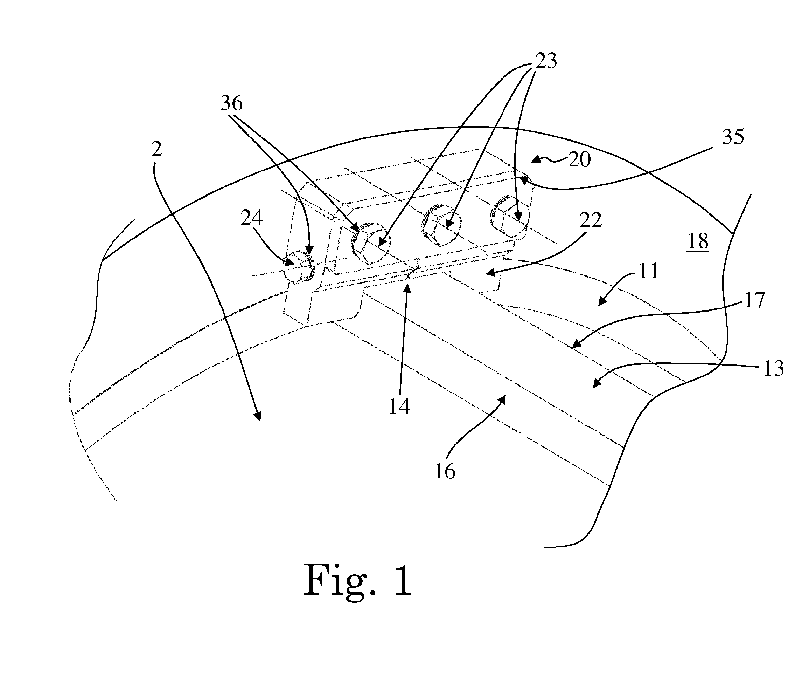

Preferably the second connection means 24 comprise a tie-rod like element 24, e.g. a screw, which is screwed inside the at least partially threaded hole 27, as illustrated in figure 1.

In practice, when installing the anti-rotation assembly 20, the anti-rotation block 21 is firmly secured to the inner side of one wall 18 of the machine frame 1 by means of screws 23. In particular, the screws 23 pass through the openings 29 and are screwed into threaded seats provided on the wall 18; then the tie-rod element 24 is entered into the hole 27 and when screwed, it causes the deformation of the body of the anti-rotation block itself; in this way the two side walls 32 of the clamping portion 22 are dragged one towards the other and mechanically precisely adhere against surfaces, e.g. two opposite surfaces 16, 17, of the associated first bar 13 blocking it in its position.

In this way also the stator core 2 which is permanently fixed to the machine frame 1, is kept substantially still and its possible rotation is blocked by the presence of the at least one anti-rotation block 21.

What above described for only one anti-rotation block 21 and related connection means 23 and 24, can be applied likewise to any desired number of connection areas between bars 13 and first and second end flanges 11 and 12. For example there could be provided: a first plurality of anti-rotation blocks 21, e.g. two or more, which are connected each exactly in the same way as above described, to the first flange 11 and to the corresponding first end portion 14 on an associated bar 13; and a second plurality of anti-rotation blocks 21, e.g. two or more, which are connected each exactly in the same way as above described, to the second flange 12 and to the corresponding second end portion 15 on an associated bar 13.

Preferably, if more than one anti-rotation blocks 21 are used, each couple of blocks 21 is connected at the corresponding end portions 14, 15 of the same bar 13 and to the corresponding inner sides of walls 18 of the machine frame 1.

It has been observed in practice how the rotating electric machine 100 according to the present disclosure fully accomplishes the mentioned task by providing a solution which allows properly facing the problem of the stator possible rotation with a solution which is effective and easy to produce and to assemble.

The described solution is particularly effective when it is used in a rotating electric machine for applications requiring an S9 duty cycle, and therefore an S9 duty-type rotating electric machine as to be considered as a particular and preferred embodiment of the electrical machine 100 according to the present disclosure.

The rotating electrical machine 100 thus conceived is susceptible of modifications and variations, all of which are within the scope of the inventive concept as defined in particular by the appended claims; any possible combination of the previously disclosed embodiments/alternatives can be implemented and has to be considered within the inventive concept of the present disclosure. All the details may furthermore be replaced with technically equivalent elements; for example, the cut 25 and/or the hole 27 may be differently shaped or positioned; any of the previously described components may be differently shaped, or used in a different number or parts or elements, or the components previously described can be differently connected with respect to each other, provided they are suitable for the scope they are devised for. For example, in the embodiment illustrated the bars 13 have a rectangular cross section but they could have a square cross-section or any other suitable shape; an additional plate 35 can be connected to the anti-rotation block 21 as for example illustrated in figure 1. Also additional wedge lock washers 36 can be used in association with the first connection means 23 and/or second connection means 24.

Also the materials used, so long as they are compatible with the specific use and purpose, as well as the dimensions, may be any according to the requirements and the state of the art.

## Claims

1. A rotating electric machine (100) comprising:
- a machine frame (1);
- a stator which is connected to said machine frame (1) and comprises a stator core (2) and a stator frame (10) to which said stator core (2) is connected to, wherein stator frame (10) comprises a first end flange (11), a second end flange (12), and a plurality of bars (13) which are positioned spaced apart from each other around and are connected to the outer periphery of said stator core (2), said bars (13) having a first end portion (14) and a second end portion (15) which are connected to said first end flange (11) and said second end flange (12), respectively;
- an anti-rotation assembly (20) for blocking the rotation of said stator relative to said machine frame (1);
**characterized in that** said anti-rotation assembly (20) comprises:
- at least one anti-rotation block (21) having a clamping portion (22);
- first connection means (23) for connecting said at least one anti-rotation block (21) to said machine frame (1);
- second connection means (24) which are connected to said at least one anti-rotation block (21) so as to operatively couple it with the first end portion (14) of a first bar (13) of said plurality of bars (13);
wherein said at least one anti-rotation block (21) has a body which partially deforms when said second connection means (24) are connected therewith so as said clamping portion (22) abuts against surfaces (16, 17) of and clamps said first bar (13).

2. The rotating electric machine (100) according to claim 1, **characterized in that** said at least one anti-rotation block (21) comprises a cut (25) which extends from an outer surface (26) of said clamping portion (22) towards the inside of the body of the anti-rotation block (21) itself.

3. The rotating electric machine (100) according to claim 2, **characterized in that** said at least one anti-rotation block (21) comprises an at least partially threaded hole (27) which extends inside the body of the anti-rotation block (21) transversally with respect to and is crossed by said cut (25).

4. The rotating electric machine (100) according to claim 3, wherein said at least partially threaded hole (27) is a blind hole.

5. The rotating electric machine (100) according to one or more of the previous claims, **characterized in that** said at least one anti-rotation block (21) comprises a head portion (28) on which there are provided one or more through openings (29) for receiving said first connection means (23).

6. The rotating electric machine (100) according to one or more of the previous claims, **characterized in that** said at least one anti-rotation block (21) comprises a central portion (30) which protrudes from said head portion (28) and is provided with said at least partially threaded hole (27) which extends in a transversal direction with respect to said one or more through openings (29).

7. The rotating electric machine (100) according to one or more of the preceding claims, **characterized in that** said clamping portion (22) of said least one anti-rotation block (21) extends from said central portion (30) in a direction opposite to said head portion (28) and has a U-shaped configuration with a central wall (31) and two side walls (32) which protrude transversally from said central wall (31) substantially parallel to each other.

8. The rotating electric machine (100) according to one or more of the preceding claims, **characterized in that** said cut (25) extends from the outer surface (26) of said central wall (31) up to a rim (33) of one of said one or more through openings (29) provided on said head portion (28).

9. The rotating electric machine (100) according to one or more of the preceding claims, **characterized in that** said second connection means (24) comprise a tie-rod like element (24) which is screwed inside said at least partially threaded hole (27).

10. The rotating electric machine (100) according to one or more of the preceding claims, **characterized in that** it is an S9 duty-type rotating electric machine.
